# EUROPÄISCHE PATENTSCHRIFT

(11) **EP 3 238 459 B1**
(45) Veröffentlichungstag und Bekanntmachung des Hinweises auf die Patenterteilung: **20.05.2020**
(21) Anmeldenummer: 15817344.3
(22) Anmeldetag: 22.12.2015
(51) Int. Cl.: H04R 1/10, H04S 7/00

(54) **KABELSET**
SET OF CABLES
JEU DE CÂBLES

(30) Priorität: 22.12.2014 DE 102014018928
(43) Veröffentlichungstag der Anmeldung: 01.11.2017
(73) Patentinhaber: KLANG:technologies GmbH, 52062 Aachen (DE)
(72) Erfinder: SCHARRER, Roman, 52074 Aachen (DE); DIETRICH, Pascal, 52074 Aachen (DE); KRECHEL, Benedikt, Aachen 52072 (DE)
(74) Vertreter: Bauer, Dirk
(86) Internationale Anmeldenummer: PCT/EP2015/080942
(87) Internationale Veröffentlichungsnummer: WO 2016/102545

(56) Entgegenhaltungen:
- WO-A1-2014/108675
- US-A1- 2006 133 632
- US-A1- 2010 142 720
- US-A1- 2014 146 979

## Beschreibung

### Einleitung

Die Erfindung betrifft ein Kabelset mit mindestens einer elektrischen Audioleitung zur Übertragung eines Audiosignals von einer Empfängereinheit an einen Kopfhörer oder Ohrhörer, wobei die mindestens eine elektrische Audioleitung ein erstes mit einem ersten Stecker versehenes und mit dem Kopfhörer oder Ohrhörer verbindbares Ende und ein zweites dem ersten Ende gegenüberliegendes Ende aufweist.

Ferner betrifft die Erfindung ein Verfahren zur Übertragung eines Audiosignals von einer Monitoringeinheit an einen am Kopf eines Trägers befindlichen Kopfhörer oder Ohrhörer mit folgenden Verfahrensschritten:
a) das Audiosignal wird von der Monitoringeinheit, die in einem Abstand zu dem Träger des Kabelsets angeordnet ist, der zwischen 2 m und 50 m beträgt, an eine an dem Körper des Trägers befindliche Empfängereinheit gesendet,
b) von der Empfängereinheit wird das Audiosignal über ein Kabelset mit mindestens einer elektrischen Audioleitung, die ein erstes mit einem ersten Stecker versehenes und mit einem Kopfhörer oder Ohrhörer verbindbares Ende und ein zweites, dem ersten Ende gegenüberliegendes Ende umfasst, an den Kopfhörer oder Ohrhörer geleitet.

Im Sinne der vorliegenden Anmeldung ist vorgesehen, dass der Ohrhörer in die Ohrmuschel oder den äußeren Gehörgang eingesetzt wird. Im gängigen Sprachgebrauch werden häufig auch die Worte "Ohrknopf" und "In-Ear" für Ohrhörer verwendet. Die vorliegende Anmeldung bezieht sich allerdings auch auf Kopfhörer, insbesondere auf ohrumschließende Bügelkopfhörer.

### Stand der Technik

Kabelsets der vorgenannten Art sind bereits aus dem Stand der Technik bekannt und werden typischerweise für maßgefertigte Ohrhörer von Musikern, beispielsweise Konzert- oder Bühnenmusikern, eingesetzt.

Dies lässt sich insbesondere damit begründen, dass Musiker spätestens nach der Einführung von elektroakustisch verstärkten Konzerten nicht mehr genau wahrnehmen können, ob sie im Verhältnis zu den anderen mitspielenden Musikern beispielsweise zu laut, zu leise oder im richtigen Tempo spielen oder singen. Zum einen gibt es ein verstärktes akustisches Signal für die Zuhörer und zum anderen die verstärkten akustischen Signale der anderen Bandmitglieder, weshalb es passieren kann, dass ein Sänger seinen eigenen Gesang aufgrund eines Schlagzeuges nicht hört oder der Schlagzeuger den Gesang des Sängers nicht wahrnimmt.

Um dieses Problem zu lösen, wurde das so genannte "Monitoring" eingeführt, mittels dessen nicht nur das Audiosignal an die Zuhörer gesteuert werden kann, sondern auch für jeden Musiker ein individuelles Audiosignal mit den entsprechenden Lautstärkenverhältnissen erzeugt wird. Zu Beginn wurden ausschließlich sogenannte Monitorlautsprecher am Bühnenboden genutzt. Erst mit der Einführung einer drahtlosen Audioverbindung wurden auch In-Ear-Kopfhörer als akustischer Wandler möglich. Beim In-Ear-Monitoring, wird das Audiosignal typischerweise von einer Empfängereinheit, die der Musiker bei sich trägt, empfangen und über das Kabelset an den maßgefertigten Ohrhörer weitergeleitet. Meist ist das zweite Ende fest oder lösbar mit einer Empfängereinheit für das Audiosignal verbunden.

Das Kabelset besteht normalerweise aus ein oder zwei Audioleitungen, die jeweils an dem ersten Ende mit einem Kopfhörer oder Ohrhörer und an dem zweiten Ende mit der Empfängereinheit verbunden oder verbindbar sind. Die Verwendung von zwei Kopfhörern oder zwei Ohrhörern, die in der Regel eine hohe Schallisolierung aufweisen, weist den Vorteil auf, dass der entsprechende Musiker das ihm übermittelte Audiosignal wahrnehmen kann, ohne dass dieses von äußeren Geräuschen beeinflusst wird. Allerdings wird bei der Verwendung von Kopfhörern oder Ohrhörern der Geräuschpegel z.B. des Publikums abgeschwächt, so dass die Musiker die Stimmung der Umgebung schlecht wahrnehmen und vor allem nicht gut orten können, weshalb dieser Effekt von manchen Musikern nicht erwünscht ist.

Da insbesondere die Anschaffung der Ohrhörer, aufgrund ihrer individuellen Anpassung an die Ohr-Anatomie des Trägers sehr kostspielig ist, ist es für viele Musiker wünschenswert, dass bei einem Defekt des Kabelsets nur dieses ausgetauscht werden muss, weshalb das jeweilige Audiokabel des Kabelsets normalerweise an seinem ersten Ende einen Stecker zur Verbindung mit dem Kopfhörer oder Ohrhörer und an seinem zweiten Ende einen Stecker zur Verbindung mit der Empfängereinheit aufweist.

Nachteilig an den vorgenannten Kopfhörern oder Ohrhörern mit den daran befestigten Kabelsets ist unter anderem, dass das Audiosignal einen unnatürlichen Raumeindruck und somit einen stark belastenden Höreindruck bei dem Musiker verursacht, da sich der Klangeindruck des In-Ear-Monitorings bei Bewegung oder Drehung des Musikers nicht verändert. Schlimmstenfalls führt dies zu Orientierungsschwierigkeiten beim Musiker.

Ferner wird in der WO 2013/144371 A1 ein Kopfhörer mit Bügel beschrieben, wobei in dem Bügel ein Intertialsensor und ein GPS-Sensor angeordnet sind. Diese Art des Kopfhörers eignet sich besonders zur Navigation oder für Audio-Stadtführungen, die mittels eines Smartphones abgespielt werden können. Die Sensoren geben eine Position und eine Ausrichtung des Trägers wieder, weshalb ein Audiosignal des Navigationssystems oder der Audio-Stadtführung in Abhängigkeit der Position des Trägers und dessen Ausrichtung (Blickrichtung) wiedergegeben werden kann.

In der AU 2012 100 113 A2 wird zumindest ein Ohrhörer mit einem Sensor beschrieben. Der Sensor kann ein Berührungssensor oder ein Positionssensor sein. Mithilfe des mindestens einen Sensors soll ein elektrisches Audiogerät über eine Gestenerkennung angesteuert werden. Sollte beispielsweise der Ohrhörer aus dem Ohr entnommen werden, wird dieses von dem Positionssensor registriert. Infolgedessen wird das Audiogerät abgeschaltet. Die Bewegung des Kopfes zur linken Schulter kann wiederum beispielsweise ein Vorwärtsspulen bewirken, wobei eine Bewegung des Kopfes in Richtung der rechten Schulter ein Rückwärtsspulen verursacht. Alternativ können auch zwei Sensoren, die jeweils in einem der Ohrhörer angeordnet sind, eine Positionsänderung des jeweiligen Ohrhörers wahrnehmen, wodurch eine Änderung an dem elektronischen Audiogerät vorgenommen wird. Der mindestens eine Ohrhörer ist fest mit einem Kabel verbunden. Diese Art der Vorrichtung eignet sich besonders für die Fälle, in denen man beispielsweise Musik hört und einen ungewünschten Song weiterspulen möchte, jedoch gerade keine Hände frei hat, um die Tasten zu bedienen.

In der US 2008/0019554 A1 wird ein Ohrhörer dargestellt, bei dem je nach Bedarf unterschiedliche Filter eingesetzt werden können. Zum Austausch der Filter ist es erforderlich, dass auch das Kabel von dem Ohrhörer gelöst werden kann. Allerdings sieht der Ohrhörer keinen Sensor vor, um beispielsweise eine Position und/oder eine Kopforientierung eines Musikers zu bestimmen.

Der in der US 2011/0316611 A1 dargestellte Gegenstand ist ein mit einem Ohrhörer und einem elektronischen Gerät lösbar verbundenes Kabel, in dem sich ein Kontrollsensor befindet. Mit Hilfe des Kontrollsensors wird das elektronische Gerät gesteuert. Das Kabel weist an seinem ersten Ende einen Stecker zur Verbindung mit dem Ohrhörer und an seinem zweiten Ende einen Stecker zur Verbindung mit dem elektronischen Gerät auf. Der Kontrollsensor ist ein Bedienelement (Taster) mittels dessen eine den Gegenstand tragende Person beispielsweise Tracks vor- oder zurückspulen kann.

In der US 2014/0006026 wird eine Head-mounted-display-Brille (HMD-Brille) beschrieben, mit der Bilder in Echtzeit an den Träger übermittelt werden können. An den Stellen wo typischerweise die Brillengläser eingesetzt sind, befinden sich kleine Anzeigedisplays. Zusätzlich sind an der Brille Bewegungssensoren angebracht, mittels denen das Bild an die Bewegungen des Trägers angepasst werden kann.

Die WO 2014/108675 A1 offenbart einen "Head-mountable apparatus" auf, bei dem es sich um eine Kombination aus einem Head-mountable display (HMO-Brille), das mit zusätzlichen Ohrhörern versehen ist, und einem fest angeschlossenen Kabelset, handelt. Über das fest mit dem Head-mountable apparatus verbundene Kabelset werden sowohl Audio - als auch Videosignale von einem Abspielgerät, wie beispielsweise einer Spielkonsole, übertragen. An dem Head-mountable apparatus ist ein Bewegungssensor angeordnet, der die Bewegungen des Kopfs des Trägers erfasst um daraus ein mögliches Warnsignal zu berechnen, wenn die Gefahr besteht, dass das Kabelset sich um den Körper des Trägers wickelt.

Das Kabelset gemäß der WO 2014/108675 A1 ist nicht mit einem ersten Stecker versehen, um von dem Kopfhörer oder Ohrhörer bzw. dem Head-mountable display, an dem der Kopf- oder Ohrhörer befestigt ist, abnehmbar zu sein. Des Weiteren verfügt das Kabelset der WO 2014/108675 A1 über keine Sendeeinheit, die von einer Empfängereinheit getrennt angeordnet ist. Demzufolge ist der Sensor bei der WO 2014/108675 A1 auch nicht mittels der mindestens einen Signalleitung mit der Sendeeinheit oder der Empfängereinheit verbindbar oder verbunden.

Aus der US 2006/0133632 A1 sind Ohrhörer mit abnehmbaren Kabeln bekannt, wobei die Abnehmbarkeit dazu dienen soll, dieselben Ohrhörer wahlweise z.B. im Stereobetrieb mit einer Wiedergabequelle für Audiosignale zu verbinden oder eine Audioleitung von einem der Ohrhörer zu lösen, um eine andere Audioleitung einzustecken, mit der Sprachsignale von einem Telefonsystem übertragbar sind. Die vorbekannten Ohrhörer besitzen keinerlei Sensor, insbesondere keinen zur Messung der Ausrichtung eines Gegenstands. Auch weisen die bekannten Ohrhörer keinerlei Sendeeinheit auf, insbesondere nicht eine von einer Empfängereinheit separierte. Schließlich ist auch eine elektrische Signalleitung, mit der ein Steuersignal direkt oder indirekt an eine Sendeeinheit übertragbar wäre, bei den vorbekannten Ohrhörern nicht vorhanden.

### Aufgabe

Der vorliegenden Erfindung liegt nunmehr die Aufgabe zugrunde, ein vorgenanntes Kabelset derart weiterzuentwickeln, dass dem Musiker beim Tragen der Kopfhörer oder Ohrhörer ein Audiosignal bereitgestellt werden kann, welches den natürlichen und räumlichen Höreigenschaften entspricht. Weiterhin liegt der Erfindung die Aufgabe zugrunde, das vorgenannte Verfahren derart weiterzuentwickeln, dass dem Musiker beim Tragen der Kopfhörer oder Ohrhörer ein Audiosignal bereitgestellt werden kann, welches den natürlichen und räumlichen Höreigenschaften entspricht.

### Lösung

Ausgehend von einer Vorrichtung der eingangs beschriebenen Art wird die zugrunde liegende Aufgabe durch die kennzeichnenden Merkmale des Anspruchs 1 gelöst. Mittels des Sensors soll eine Ausrichtung und Positionierung eines das Kabelset tragenden Musikers (=Träger) gemessen werden, so dass zum einen ein Ort des Trägers auf einer Bühne und folglich eine annähernd exakte Positionierung der Musiker zueinander ermittelt werden kann und/oder zum anderen eine Stellung des Kopfes in Abhängigkeit zu seiner Neutralstellung (= ein gerade nach vorne ausgerichteter Kopf) bestimmt werden kann. Der Kopf kann sich um drei Achsen bewegen, um seine Neutralstellung zu verlassen. Mittels des Sensors kann somit also beispielsweise die Stellung des Kopfes nach einer Bewegung von letzterem um seine transversale Achse (Nickbewegung), longitudinale Achse (Drehbewegung) und/oder sagittale Achse (Seitneigung) gemessen werden. Der Sensor sollte dabei derart an dem Kabelset befestigt und letzteres derart von dem Träger getragen werden, dass sowohl Relativbewegungen zwischen Sensor und Kabelset als auch zwischen Kabelset und Träger möglichst ausgeschlossen sind, damit der Sensor tatsächlich die Position und Ausrichtung des Kopfes des Trägers widerspiegelt.

Die Bestimmung der Ausrichtung und Positionierung des Sensors beziehungsweise des das Kabelset tragenden Trägers erfolgt über ein hochauflösendes Tracking, dabei ist vorgesehen, dass der mindestens eine Sensor bereits eine Änderung der Ausrichtung des Sensors beziehungsweise Trägers von vorzugsweise unter 15°, weiter vorzugsweise unter 10°, weiter vorzugsweise unter 5°, weiter vorzugsweise unter 1 ° registrieren kann. Ferner kann der mindestens eine Sensor vorzugsweise eine Änderung der Positionierung dieses Sensors beziehungsweise Trägers im Raum von vorzugsweise genauer als 4 m, weiter vorzugsweise genauer als 2 m, weiter vorzugsweise genauer als 1 m, weiter vorzugsweise genauer als 20 cm wahrnehmen.

Aufgrund der gemessenen Ausrichtung kann ein passendes Audiosignal an den Träger weitergeleitet werden. Das bei dem Träger ankommende Audiosignal ist nun nicht mehr lageunabhängig, sondern es erfolgt eine möglichst natürliche Nachführung der Kopfbewegung in dem Audiosignal, das heißt, dass die natürliche Nachführung der Kopfbewegung bei der Wiedergabe des Audiosignal berücksichtigt wird. Der Träger hat also trotz des maßgefertigten Kopfhörers oder Ohrhörers, durch den normalerweise kaum Geräusche aus der Umgebung dringen können, eine räumlich getreue Wahrnehmung der Musik in seiner Umgebung, unabhängig davon, wie und wo er sich zum Beispiel auf einer Bühne oder in einem Raum bewegt und trotzdem können alle Vorteile des In-Ear-Monitorings beibehalten werden.

Die Stellung des Kopfes lässt sich insbesondere aufgrund des maximalen Abstandes von 40 cm zwischen dem Sensor und dem ersten Ende ermitteln, so dass der Sensor mindestens die Drehbewegung, aber vorzugsweise auch die Nickbewegung, und Seitneigung des Kopfes erfasst. Ein zunehmender Abstand zwischen dem Sensor und dem ersten Ende führt dabei zu immer ungenaueren Messwerten, da die Korrelation zwischen Sensorposition und Kopfbewegung dann spürbar geringer wird.

Die Befestigung des Sensors an der mindestens einen ersten Audiosignalleitung erfolgt beispielsweise mittels einer Verklebung, Verguss und/oder einer Steckverbindung, so dass der Sensor sich nicht von der Audioleitung lösen oder entlang dieser verrutschen kann.

Ein Vorteil des vorgenannten Kabelsets besteht unter anderem auch darin, dass das erste Ende der Audioleitung einen Stecker aufweist, der typischerweise mit gängigen maßgefertigten Kopfhörern oder Ohrhörern verbindbar ist, so dass mögliche Abnehmer des Kabelsets keine neuen maßgefertigten Kopfhörer oder Ohrhörer anschaffen, sondern lediglich das vorhandene Kabelset gegen ein erfindungsgemäßes austauschen müssen. Das Kabelset selbst enthält gemäß der vorliegenden Anmeldung also keinen Ohrhörer oder Kopfhörer, sondern kann mit diesen verbunden werden. Der Ohrhörer oder Kopfhörer enthält einen Lautsprecher, der wiederum ein elektroakustischer Wandler ist. Das heißt also, dass aus einem elektrischen Audiosignal mittels eines Wandlerprinzips zunächst mechanische Schwingungen und aus diesen Schallwellen erzeugt werden.

Unter "Stecker" sollen im Rahmen dieser Anmeldung sowohl "männliche" als auch "weibliche" Steckerteile oder Kombinationen aus beiden verstanden werden.

Eine besonders genaue Ausrichtung lässt sich mittels des Sensors messen, indem erfindungsgemäß vorgesehen ist, dass der Abstand zwischen dem Sensor und dem ersten Ende der mindestens einen elektrischen Audioleitung maximal 30 cm, vorzugsweise maximal 20 cm, weiter vorzugsweise maximal 10 cm, beträgt. Die Sicherheit, eine gute Korrelation zwischen Sensor und Kopfbewegung zu erhalten, wird hierdurch weiter erhöht.

Die Erfindung weiter ausgestaltend ist vorgesehen, dass das zweite Ende der Audioleitung mit der Empfängereinheit oder der Sendeeinheit verbunden ist. Das Kabelset setzt sich somit zumindest aus der mindestens einen Audioleitung, dem Sensor sowie einer Empfängereinheit und einer davon separaten Sendeeinheit zusammen. Das von dem Sensor gemessene Steuersignal wird an die Sendeeinheit geleitet, wobei diese das Steuersignal wiederum an eine zentrale Monitoringeinheit weiterleitet. Aufgrund des eingehenden Steuersignals wird ein entsprechend kopfbezogenes Audiosignal berechnet und über die Empfängereinheit und die daran befestigte mindestens eine Audioleitung an die Kopfhörer oder Ohrhörer weitergeleitet.

Alternativ befindet sich an dem zweiten Ende der mindestens einen Audioleitung ein zweiter Stecker, der wiederum mit einer externen Empfängereinheit oder einer externen Sendeeinheit lösbar verbunden werden kann. Daraus ergibt sich der Vorteil, dass bei einem Defekt des Kabelsets nicht auch die Empfängereinheit und/oder Sendeeinheit, die bei der vorherigen Alternative mit zu dem Kabelset gehörten, ausgetauscht werden müssen. Dadurch kann eine Kostenersparnis erzielt werden. Hinzu kommt, dass je nach Monitoringeinheit gegebenenfalls unterschiedliche Empfängereinheiten und Sendeeinheiten eingesetzt werden. Das Kabelset kann in diesem Fall aufgrund des zweiten Steckers mit der zu der Monitoringeinheit passenden Empfängereinheit oder Sendeeinheit verbunden werden und ist nicht an eine fest angeschlossene Empfängereinheit oder Sendeeinheit gebunden. Eine Weiterentwicklung der Erfindung sieht vor, dass sich der erste ohrhörerseitige Stecker von dem zweiten Stecker unterscheidet. Der erste Stecker, der normalerweise mit den gängigen maßgefertigten Ohrhörern oder Kopfhörern verbunden werden soll, weist eine andere Bauform auf, als der zweite Stecker, der mit der Empfängereinheit oder Sendeeinheit verbindbar ist. Sowohl der erste als auch der zweite Stecker werden derart gewählt, dass das erfindungsgemäße Kabelset mit gängigen maßgefertigten Ohrhörern, Kopfhörern, Empfängereinheiten und Sendeeinheiten mit jeweils standardisierten Steckverbindungen verbunden werden kann. Erfindungsgemäß ist vorgesehen, dass der erste Stecker eine elektrische Steckverbindung zu dem Ohrhörer oder Kopfhörer herstellt.

Gemäß der Erfindung ist vorgesehen, dass der Sensor mittels mindestens einer elektrischen Signalleitung mit der Sendeeinheit und/ oder Empfängereinheit verbindbar oder verbunden ist, wobei über die elektrische Signalleitung mindestens ein Steuersignal direkt oder indirekt an die Sendeeinheit übertragbar ist. Eine direkte Übertragung des Steuersignals findet dann statt, wenn die Signalleitung unmittelbar mit der Sendeeinheit verbunden oder verbindbar ist, wohingegen eine indirekte Übertragung in den Fällen stattfindet, in denen zwischen der Signalleitung und der Sendeeinheit beispielsweise die Empfängereinheit angeordnet ist und das Steuersignal "durch" die Empfängereinheit oder deren Gehäuse geführt wird.

Die elektrische Signalleitung weist ein erstes Ende auf, welches mit dem Sensor verbunden ist und sich auf einer dem Kopfhörer oder Ohrhörer zugewandten Seite der Signalleitung befindet. Dementsprechend ist das erste Ende der Signalleitung vorzugsweise maximal 40 cm, weiter vorzugsweise maximal 30 cm, weiter vorzugsweise maximal 20 cm, weiter vorzugsweise 10 cm von dem ersten Ende der mindestens einen Audioleitung entfernt angeordnet. Ein dem ersten Ende gegenüberliegendes zweite Ende der Signalleitung, also ein dem Kopfhörer oder Ohrhörer abgewandtes Ende der Signalleitung, kann unmittelbar mit der Sende- oder Empfängereinheit verbunden sein. In diesem Fall gehört die Sende- oder Empfängereinheit zu dem Kabelset.

Alternativ ist erfindungsgemäß vorgesehen, dass die elektrische Signalleitung an einem dem Kopfhörer oder Ohrhörer abgewandten Ende einen Stecker aufweist, der mit einer separaten Sende- oder Empfängereinheit lösbar verbunden werden kann. Eine separate Sende- oder Empfängereinheit ist insbesondere bei unterschiedlichen Monitoringeinheiten vorteilhaft, so dass das Kabelset flexibel mit beliebigen Sende- oder Empfängereinheiten verbunden werden kann.

Eine besonders einfache Handhabung liegt vor, wenn das zweite Ende der Signalleitung in den gleichen Stecker geführt wird, wie das zweite Ende der Audioleitung. Das heißt, dass sowohl die Audioleitung als auch die Signalleitung in dem zweiten Stecker enden. Folglich werden sowohl das Audiosignal als auch das Steuersignal durch die Sende- oder die Empfängereinheit geleitet. Infolgedessen würde, wenn der zweite Stecker mit der Empfängereinheit verbunden ist, das Steuersignal zunächst von der Signalleitung an die Empfängereinheit und anschließend erst an die Sendeeinheit weitergeleitet werden, wobei die Weiterleitung des Audiosignals unmittelbar von der Empfängereinheit an den Kopfhörer oder Ohrhörer stattfinden kann. Ist der Stecker jedoch mit der Sendeeinheit verbunden, findet eine direkte Weiterleitung des Steuersignals an die Sendeeinheit und somit an die Monitoringeinheit statt, allerdings muss in diesem Fall das Audiosignal zuerst von der Empfängereinheit an die Sendeeinheit geleitet werden, bevor es zum Kopfhörer oder Ohrhörer geführt wird.

Insbesondere für den Fall, dass die mindestens eine Audioleitung und die Signalleitung mit dem jeweiligen zweiten Ende in dem zweiten Stecker angeordnet sind, ist in einer besonders vorteilhaften Weiterentwicklung der Erfindung vorgesehen, dass die Sendeeinheit und die Empfängereinheit über eine Verbindungsleitung miteinander verbunden sind, so dass eine Übertragung des Steuersignals oder des Audiosignals an die entsprechende Einheit möglich ist. Als sinnvoll hat sich erwiesen, dass die Verbindungsleitung eine weitere Audioleitung oder Signalleitung ist und vorzugsweise an beiden Enden jeweils mit einem Stecker verbunden ist.

Die aus dem Stand der Technik bekannten Kabelsets werden lediglich mit der Empfängereinheit verbunden, da keine Sendeeinheit notwendig ist. Die typischen Empfängereinheiten weisen somit lediglich einen Anschluss zur Weiterleitung des Audiosignals an die Kopfhörer oder Ohrhörer auf. Infolgedessen ist es besonders vorteilhaft, wenn der zweite Stecker, der sowohl ein Audiosignal als auch ein Steuersignal weiterleiten muss, zunächst mit der Sendeeinheit verbunden wird. In der Sendeeinheit kann das Steuersignal verarbeitet und an die zentrale Monitoringseinheit weitergeleitet werden. Das Audiosignal kann dann von einer bereits existierenden Empfängereinheit über die Verbindungsleitung und die Sendeeinheit an das Audiokabel geleitet werden. Die Kopfhörer oder Ohrhörer sowie die Empfängereinheit können also aus bestehenden Systemen genutzt werden und entsprechend braucht nur das neue Kabelset mit der Sendeeinheit zwischen der Empfängereinheit und dem Kopfhörer oder Ohrhörer angebracht werden. Selbstverständlich kann das Kabelset auch die Sendeeinheit aufweisen, so dass die Audioleitung und die Signalleitung fest mit der Sendeeinheit verbunden sind.

Eine weitere erfindungsgemäße Ausgestaltung sieht eine zweite elektrische Audioleitung zur Übertragung eines Audiosignals vor, wobei die zweite elektrische Audioleitung an einem ersten Ende mit einem dritten Stecker versehen ist, der mit einem zweiten Kopfhörer oder Ohrhörer verbindbar ist, und an einem zweiten Ende entweder mit dem zweiten Stecker verbunden ist oder mit einem vierten Stecker mit der Empfängereinheit oder der Sendeinheit verbindbar ist oder an dem zweiten Ende mit der Empfängereinheit oder der Sendeeinheit verbunden ist oder mit einem fünften Stecker an dem ersten Kopfhörer oder Ohrhörer verbindbar ist oder verbunden ist. Bei der Verwendung von zwei Kopfhörern oder Ohrhörern kann eine besonders getreue Wahrnehmung des Zusammenspiels der unterschiedlichen Musiker unter Zuhilfenahme der Binauraltechnik in einem Audiosignal an den Träger weitergeleitet werden, ohne dass Verfälschungen und Störungsgeräusche von Außen auftreten.

Die Messung der Ausrichtung des mindestens einen Sensors kann insbesondere dann auf die Ausrichtung des Kopfes übertragen werden, wenn der mindestens eine Sensor an dem ersten und/oder dritten Stecker der mindestens einen elektrischen Audioleitung angeordnet ist. Dies lässt sich unter anderem damit begründen, dass der Ohrhörer typischerweise unbeweglich im Ohr des Trägers eingesetzt ist. Der mindestens eine Sensor der sich nunmehr durch die Anordnung in dem ersten und/ oder dritten Stecker unmittelbar an dem Kopfhörer oder Ohrhörer und somit in der Nähe des Ohres befindet, kann lediglich durch eine Kopfbewegung seine Ausrichtung ändern. Folglich entspricht die Ausrichtung des Sensors der Stellung des Kopfes vorzugsweise in Abhängigkeit von der Neutralstellung des Kopfes.

Vorteilhafterweise sind die mindestens eine elektrischen Audioleitung und/oder die mindestens eine zweite elektrische Audioleitung und/oder die mindestens eine Signalleitung, abschnittsweise unmittelbar nebeneinander angeordnet, vorzugsweise miteinander verdrillt und/oder von einer gemeinsamen äußeren Umhüllung umgeben, wobei sich vorzugsweise die elektrischen Audioleitungen sowie die vorzugsweise mindestens eine elektrische Signalleitung insbesondere an einer Verzweigung in zwei Stränge jeweils in Richtung des ersten und zweiten Ohrhörers aufteilen, so dass ein Abstand zwischen dem ersten und/oder dritten Stecker und der Verzweigung vorzugsweise maximal 40 cm, weiter vorzugsweise maximal 30 cm beträgt. Insbesondere wenn die Signalleitung und die erste und zweite Audioleitung an ihrem jeweiligen zweiten Ende mit dem zweiten Stecker verbunden sind, ist eine unmittelbare Anordnung nebeneinander besonders vorteilhaft, da somit vermieden wird, dass die Leitungen sich miteinander verknoten können oder versehentlich eine Leitung, beispielsweise aus dem zweiten Stecker, herausgezogen wird.

An der Verzweigung trennen sich die Leitungen wieder auf, so dass beispielsweise die erste Audioleitung mitsamt der Signalleitung, welche weiterhin miteinander verdrillt sein können, zu dem ersten Kopfhörer oder Ohrhörer und die zweite Audioleitung zu dem zweiten Kopfhörer oder Ohrhörer geführt wird. Der Abstand der Verzweigung zu dem jeweiligen ersten Ende sollte dabei vorzugsweise maximal 40 cm betragen, so dass die Strecke, über welche die Leitungen sich miteinander, insbesondere wenn das Kabelset nicht verwendet wird, sich möglichst nicht miteinander verknoten. Dennoch sollte der Abstand so groß gewählt werden, dass der Träger nicht eingeschränkt wird und ein unangenehmer Tragekomfort entsteht.

Eine gemessene Ausrichtung des Sensors, so dass diese Ausrichtung auf die Ausrichtung des Kopfes übertragbar ist, ist auch dann noch gegeben, wenn erfindungsgemäß vorgesehen ist, dass der mindestens eine Sensor in der Verzweigung angeordnet ist.

Eine vorteilhafte Weiterentwicklung sieht jedoch vor, dass mindestens ein weiterer Sensor in der Verzweigung angeordnet ist. Dieser mindestens eine weitere Sensor kann beispielsweise Referenzwerte messen, welche mit den Messwerten des mindestens einen Sensors verglichen werden können. Hierdurch können zusätzlich zur Kopforientierung auch die Relativausrichtung zwischen Kopf und Korpus bestimmt werden, die einen Einfluss auf die Aufbereitung der binauralen Audiosignale hat.

Alternativ ist denkbar, dass sowohl der mindestens eine Sensor als auch der mindestens eine weitere Sensor in der Verzweigung angeordnet sind, wobei dies insbesondere dann sinnvoll sein kann, wenn die Sensoren unterschiedliche physikalische Größen messen. Erfindungsgemäß ist vorgesehen, dass der mindestens eine Sensor ein Drehratensensor oder ein Bewegungssensor oder ein Magnetometer, insbesondere ein Inertialsensor oder ein Giersensor ist. Diese Sensoren ermöglichen eine besonders gute Messung der Ausrichtung des Sensors, so dass folglich ausreichend bestimmt werden kann, in welcher Stellung der Kopf sich gerade befindet und/oder an welcher Position der Träger auf der Bühne steht. Ferner ist in einer Weiterentwicklung vorgesehen, dass der mindestens eine weitere Sensor ein Drehratensensor oder ein Bewegungssensor oder ein Magnetometer, insbesondere ein Inertialsensor oder ein Giersensor ist, oder ein Temperatursensor oder ein Luftdrucksensor oder ein Feuchtigkeitssensor oder ein Mikrofon ist. Die Messung unterschiedlicher Parameter verspricht eine exaktere Wiedergabe der Ausrichtung des Sensors.

Für den Fall, dass der weitere Sensor ein Mikrofon darstellt, welches beispielsweise von einem Schalldrucksensor gebildet wird, kann zusätzlich wieder das aktuelle Umgebungsgeräusch adaptiv zum binauralen Audiosignal zugemischt werden. Dies ist insbesondere sinnvoll, um Stimmungen des Publikums und die Kommunikation mit Mitmusikern in Spielpausen insbesondere ohne die Herausnahme der Ohrhörer zu ermöglichen.

Um die Strecke zwischen dem jeweiligen ersten Ende und dem jeweiligen zweiten Ende der entsprechenden Audioleitung und/oder Signalleitung möglichst kurz zu halten, kann es sich als vorteilhaft erweisen, wenn die Empfängereinheit und/oder die Sendeeinheit an der Verzweigung angebracht ist. Die Gefahr, dass ein Musiker mit der mindestens einen Audioleitung oder Signalleitung irgendwo hängen bleibt, wird somit reduziert.

Schließlich wird das vorgenannte Verfahren erfindungsgemäß derart weiterentwickelt, dass
c) mindestens ein Sensor seine Ausrichtung relativ zu seiner Umgebung misst, wobei der Sensor in einem Abstand von maximal 40 cm zu dem ersten Ende der mindestens einen elektrischen Audioleitung angeordnet und an letzterer befestigt ist,
d) die Ausrichtung des Sensors über eine Signalleitung an eine an dem Körper des Trägers befindliche, von der Empfängereinheit separate Sendeeinheit weitergeleitet und anschließend an die Monitoringeinheit gesendet wird, und
e) die Monitoringeinheit das Audiosignal in Abhängigkeit von der Ausrichtung des mindestens einen Sensors ausgibt.

Der Zweck der Messung der Ausrichtung des Sensors und die Vorteile entsprechen dem zuvor zu dem Kabelset gemäß Anspruch 1 beschriebenen Zweck und den Vorteilen. Vorteilhafterweise weist die Monitoringeinheit eine Auswerteeinheit, eine Audioeinheit und zumindest eine Sende- und Empfängereinheit auf. Die mindestens eine Sende- und Empfängereinheit kann von der Sendeeinheit, die sich an einem Träger befindet, Signale betreffend die Ausrichtung des Sensors relativ zu seiner Umgebung zugesandt bekommen. Mit Hilfe der Auswerteeinheit können diese Ausrichtungssignale ausgewertet werden. Anschließend kann die Audioeinheit das der Ausrichtung des Trägers entsprechende Audiosignal an die Sende- und Empfängereinheit weiterleiten, die wiederum das Audiosignal an die Empfängereinheit, die sich an dem entsprechenden Träger befindet, senden kann.

Es ist vorgesehen, dass die Signalleitung auch Bestandteil des Kabelsets sein kann, wobei die Signalleitung vorteilhafterweise ein Signal, das die Ausrichtung des Sensors wiedergibt, von dem Sensor zu der an dem Träger befindlichen Sendeeinheit leiten kann.

### Ausführungsbeispiele

Die vorstehend beschriebene Erfindung wird nachfolgend anhand der Ausführungsbeispiele, welche in den Figuren dargestellt werden, näher erläutert.

Es zeigt:
- Fig. 1:: eine schematische Darstellung eines erfindungsgemäßen Kabelsets in einer ersten Ausführungsform,
- Fig. 2:: eine schematische Darstellung eines erfindungsgemäßen Kabelsets in einer zweiten Ausführungsform,
- Fig. 3:: eine schematische Darstellung eines Trägers eines erfindungsgemäßen Kabelsets in einer dritten Ausführungsform, und
- Fig. 4:: eine schematische Darstellung eines Trägers eines erfindungsgemäßen Kabelsets in einer vierten Ausführungsform und
- Fig. 5:: zwei Träger mit jeweils einem eigenen Kabelset und einer gemeinsamen Monitoringeinheit

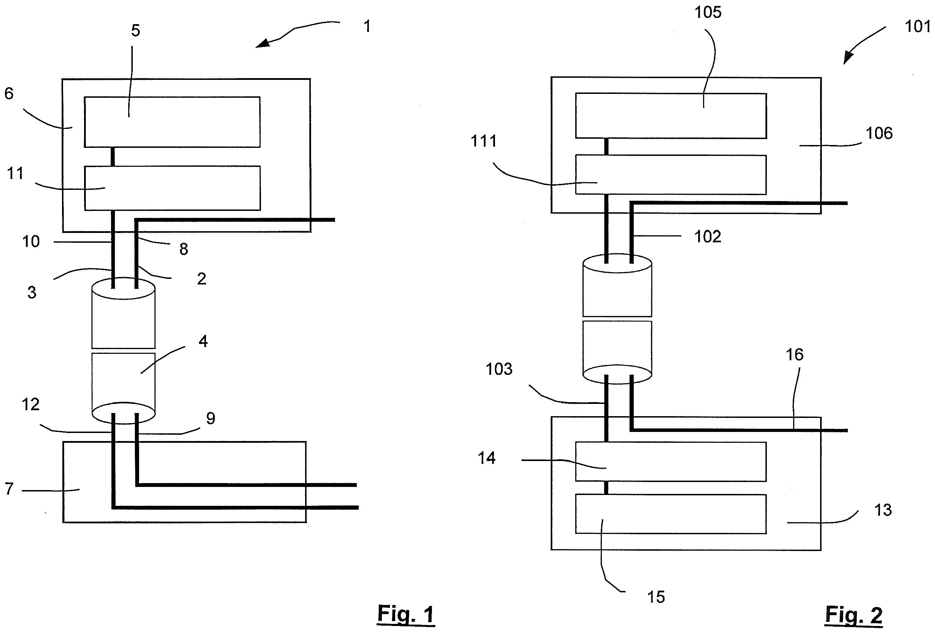

Die Figur 1 zeigt ein erfindungsgemäßes Kabelset **1** mit einer Audioleitung **2** und einer Signalleitung **3,** die abschnittsweise gemeinsam von einer äußeren Umhüllung **4** umgeben sind. Ferner weist das Kabelset **1** noch einen Sensor **5,** einen ersten und einen zweiten Stecker **6, 7** auf.

An einem ersten Ende **8** der Audioleitung **2** befindet sich der erste Stecker **6.** Dieser Stecker **6** kann mit einem hier nicht dargestellten Kopfhörer oder Ohrhörer verbunden werden, so dass einem den Kopfhörer oder Ohrhörer tragenden Musiker (=Träger) ein Audiosignal übermittelt werden kann. Ein dem ersten Ende **8** gegenüberliegendes zweites Ende **9** der Audioleitung **2** weist den zweiten Stecker **7** auf.

Die parallel zu der Audioleitung **2** verlaufende Signalleitung **3** ist an ihrem ersten Ende **10** mit einer Vorverarbeitungseinheit **11** und dem Sensor **5** verbunden, wobei diese in dem ersten Stecker **6** angeordnet sind. Folglich ist ein Abstand zwischen dem Sensor **5** und dem ersten Ende **10** der Audioleitung nahezu null. Eine sich durch die Bewegungen des Trägers im Raum ändernde Ausrichtung des Sensors **5** wird von dem Sensor **5** gemessen und in ein Steuersignal umgewandelt. Das Steuersignal wird nunmehr über die Signalleitung **3** in Richtung eines dem ersten Ende **10** gegenüberliegendes zweites Ende **12** der Signalleitung **3** weitergeleitet, wobei das zweite Ende **12** der Signalleitung **3,** wie auch das zweite Ende **9** der Audioleitung **2,** mit dem zweiten Stecker **7** verbunden ist.

Der zweite Stecker **7** kann lösbar mit einer hier nicht dargestellten Sende- oder Empfängereinheit verbunden werden, so dass das Steuersignal von der Sendeeinheit an eine zentrale Monitoringeinheit geleitet werden kann oder von der Empfängereinheit ein Audiosignal empfangen wird und dieses über die Audioleitung **2** an den Kopfhörer oder Ohrhörer weiterleitet.

In der Figur 2 wird eine zweite Ausführungsform eines erfindungsgemäßen Kabelsets **101** schematisch dargestellt, wobei sich dieses Kabelset **101** dahingehend von dem Kabelset **1** gemäß Figur 1 unterscheidet, dass das Kabelset **101** anstatt des zweiten Steckers **7** eine fest mit dem Kabelset **101** verbundene Sendeeinheit **13** aufweist, wobei sich in der Sendeeinheit **13** ein Datenverarbeitungsmodul **14** und ein Funkmodul **15** befinden. Das Kabelset **101** setzt sich folglich aus einer Audioleitung **102,** einer Signalleitung **103,** einem ersten Stecker **106,** einem Sensor **105** und der Sendeeinheit **13** zusammen.

Das Steuersignal wird nun von dem Sensor **105** und einer Vorverarbeitungseinheit **111** an die Sendeeinheit **13** übertragen. Die Sendeeinheit **13** leitet das Steuersignal, mittels des Funkmoduls **15,** an eine zentrale hier nicht dargestellte Monitoringeinheit weiter.

Die Sendeeinheit **13** kann über eine Verbindungsleitung **16** mit einer hier nicht dargestellten Empfängereinheit verbunden werden. Das Audiosignal, welches typischerweise von einer Empfängereinheit empfangen und anschließend unmittelbar an den Kopfhörer oder Ohrhörer weitergeleitet wird, muss bei diesem Kabelset **101** nunmehr zunächst über die Verbindungsleitung **16,** welche vorzugsweise auch eine Audioleitung ist, zu der Sendeeinheit **13** und anschließend über die Audioleitung **102** und den ersten Stecker **106** an den Kopfhörer oder Ohrhörer geleitet werden.

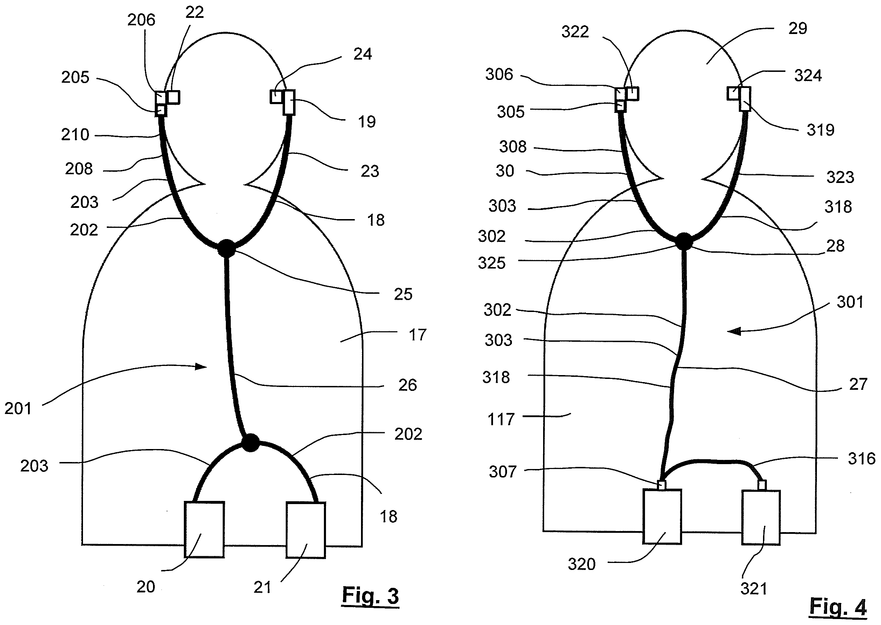

Die Figur 3 zeigt, wie ein Träger **17** eine weitere Ausführungsform eines erfindungsgemäßen Kabelsets **201** tragen würde. Das Kabelset **201** besteht aus einer ersten Audioleitung **202** und einer zweiten Audioleitung **18,** einer Signalleitung **203,** einem Sensor **205,** einem ersten Stecker **206** und einem dritten Stecker **19** sowie einer Sendeeinheit **20,** welcher der Sendeeinheit **13** gemäß Figur 2 entspricht, und einer Empfängereinheit **21.**

Ein erstes Ende **208** der ersten Audioleitung **202** ist über den ersten Stecker **206** mit einem ersten Ohrhörer **22** verbunden und ein erstes Ende **23** der zweiten Audioleitung **18** ist wiederum über den dritten Stecker **19** mit einem zweiten Ohrhörer **24** verbunden. An dem ersten Stecker **206** befindet sich ferner der Sensor **205** zur Messung einer Ausrichtung des Sensors **205.** Der Sensor **205** ist mit der Signalleitung **203** verbunden, wobei die erste Audioleitung **202** und die Signalleitung **203** an ihren jeweiligen ersten Enden **208, 210** zusammengeführt werden. An einer Verzweigung **25** werden die erste Audioleitung **208** und die Signalleitung **203** mit der zweiten Audioleitung **18** zusammengeführt und miteinander verdreht. Ein Abschnitt **26,** über den die drei Leitungen **18, 202, 203** zusammengeführt sind, beträgt in etwa 1 m.

Anschließend wird die Signalleitung **203** von der ersten Audioleitung **202** und der zweiten Audioleitung **18** weggeführt und ist mit der Sendeeinheit **20** fest verbunden. Die beiden Audioleitungen **18, 202** sind wiederum fest mit der Empfängereinheit **21** verbunden.

Die Figur 4 zeigt einen weiteren Träger **117** eines erfindungsgemäßen Kabelsets **301** in einer weiteren Ausführungsform. Das Kabelset **301** besteht aus einer ersten Audioleitung **302,** einer zweiten Audioleitung **318,** einer ersten Signalleitung **303** und einer zweiten Signalleitung **27,** einem ersten Stecker **306,** einem zweiten Stecker **307,** einem dritten Stecker **319** sowie aus einem ersten Sensor **305** und einem zweiten Sensor **28.**

Ein erstes Ende **308** der ersten Audioleitung **302** ist mit dem ersten Stecker **306** und das erste Ende **323** der zweiten Audioleitung **318** mit dem dritten Stecker **319** verbunden, wobei der erste und der dritte Stecker **306, 319** jeweils lösbar mit den Ohrhörern **322, 324** verbunden sind.

In dem ersten Stecker **306** befindet sich der erste Sensor **305,** in Form eines Intertialsensors zu Messung der Stellung eines Kopfes **29.** Der in der Figur 4 dargestellte Kopf **29** befindet sich in einer Neutralstellung. Der Sensor **305** ist mit der Signalleitung **303** verbunden, die in einem ersten Bereich **30** mit der ersten Audioleitung **302** zusammengeführt wird. An einer Verzweigung **325,** in der sich der zweite Sensor **28,** in Form eines Bewegungssensors befindet, treffen die erste Audioleitung **302,** die zweite Audioleitung **318,** die Signalleitung **303** und die zweite Signalleitung **27** aufeinander und werden von einer hier nicht sichtbaren äußeren Umhüllung umgeben. Die vier Leitungen **302, 303, 27, 318** führen in den zweiten Stecker **307,** der lösbar mit einer externen Sendeeinheit **320** verbunden ist.

Über die Signalleitungen **27, 303** wird jeweils ein Steuersignal über die Sendeeinheit **320** an eine zentrale Monitoringeinheit weitergeleitet.

Damit ein Audiosignal von einer Empfängereinheit **321** über die Sendeinheit **320,** den zweiten Stecker **307,** die erste Audioleitung **302** und/oder zweite Audioleitung **318** und den ersten Stecker **306** und/oder dritten Stecker **319** geleitet werden kann, sind die Sendeeinheit 320 und die Empfängereinheit **321** mittels einer Verbindungsleitung **316,** in Form einer Audioleitung, miteinander verbunden.

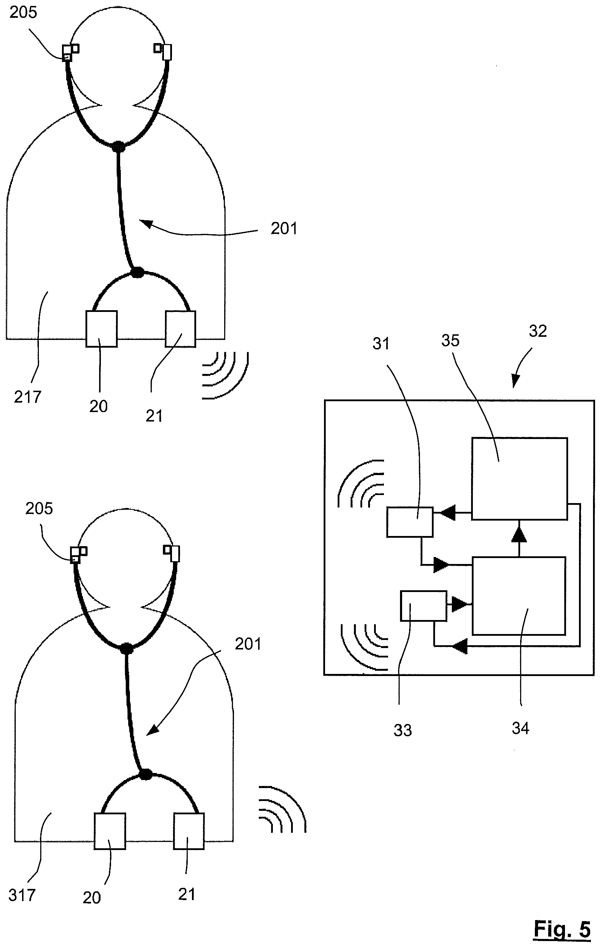

In der Figur 5 werden zwei Träger **217, 317** eines erfindungsgemäßen Kabelsets **201** gemäß Figur 3 dargestellt. Über die Sendeeinheit **20** des ersten Trägers **217** werden Signale betreffend die Ausrichtung des Sensors **205** an eine erste Sende- und Empfängereinheit **31** einer Monitoringeinheit **32** weitergeleitet. Analog dazu sendet die Sendeeinheit **20** des zweiten Trägers **317** Signale betreffend die Ausrichtung des Sensors **205** des zweiten Trägers **317** an eine zweite Sende- und Empfängereinheit **33** der Monitoringeinheit **32.** Weitere Träger eines erfindungsgemäßen Kabelsets mit jeweils separaten Sende- und Empfängereinheiten sind zwar hier nicht dargestellt, jedoch durchaus denkbar.

Die eingehenden Signale bezüglich der Ausrichtung des Sensors **205** werden von den beiden Sende- und Empfängereinheiten **31, 33** der Monitoringeinheit **32** jeweils an eine Auswerteeinheit **34** der Monitoringeinheit **32** weitergeleitet und dort verarbeitet. Das erzeugte Steuersignal wird jeweils an eine Audioeinheit **35** geleitet und es erfolgt eine von der Ausrichtung des jeweiligen Sensors **205** relativ zu seiner Umgebung abhängige Ausgabe des Audiosignals von der Audioeinheit **35** an die erste Sende- und Empfängereinheit **31** und an die zweite Sende- und Empfängereinheit **33,** die wiederum das jeweilige Audiosignal an die entsprechende an dem Träger **217, 317** befindliche Empfängereinheiten **21** versenden. Erfindungsgemäß ist dabei vorgesehen, dass beide Träger **217, 317** unterschiedliche Audiosignale empfangen, da beide Sensoren **205** typischerweise anders zu ihrer Umgebung ausgerichtet sind und/oder die Ortskoordinaten beider Träger typischerweise voneinander abweichen und/oder die Träger unterschiedliche Mixe, also unterschiedlich zusammen gemischte Audiosignale (bei denen zum Beispiel einzelne Instrumente, wie Schlagzeug, Gitarre, Keyboard o. a. weggelassen oder in der Signalstärke verändert werden), wünschen.

### Bezugszeichenliste

- 1, 101, 201, 301: Kabelset
- 2, 102, 202, 302: Audioleitung
- 3, 103, 203, 303: Signalleitung
- 4: Umhüllung
- 5, 105, 205, 305: Sensor
- 6, 106, 206, 306: Stecker
- 7, 307: Stecker
- 8, 208, 308: Ende
- 9: Ende
- 10, 210: Ende
- 11, 111: Vorbereitungseinheit
- 12: Ende
- 13: Sendeeinheit
- 14: Datenverarbeitungsmodul
- 15: Funkmodul
- 16, 316: Verbindungsleitung
- 17, 117, 217, 317: Träger
- 18, 318: Audioleitung
- 19, 319: Stecker
- 20, 320: Sendeeinheit
- 21, 321: Empfängereinheit
- 22, 322: Ohrhörer
- 23, 323: Ende
- 24, 324: Ohrhörer
- 25, 325: Verzweigung
- 26: Abschnitt
- 27: Signalleitung
- 28: Sensor
- 29: Kopf
- 30: Bereich
- 31: Sende- und Empfängereinheit
- 32: Monitoringeinheit
- 33: Sende- und Empfängereinheit
- 34: Auswerteeinheit
- 35: Audioeinheit

## Patentansprüche

1. Kabelset (1, 101, 201, 301) mit mindestens einer elektrischen Audioleitung (2, 102, 202, 302) zur Übertragung eines Audiosignals von einer zum Empfang des Audiosignals ausgebildeten Empfängereinheit (21, 221, 321) an einen Kopfhörer oder Ohrhörer (22, 322), wobei die mindestens eine elektrische Audioleitung (2, 102, 202, 302) ein erstes mit einem ersten Stecker (6, 106, 206, 306) versehenes und mit dem Kopfhörer oder Ohrhörer (22, 322) verbindbares Ende (8, 208, 308) und ein zweites dem ersten Ende (8, 208, 308) gegenüberliegendes Ende (9) umfasst,
**gekennzeichnet durch**
- mindestens einen Sensor (5, 105, 205, 305), zur Messung einer Ausrichtung des Sensors (5, 105, 205, 305), der in einem Abstand von maximal 40 cm zu dem ersten Ende (8, 208,308) der mindestens einen elektrischen Audioleitung (2, 102, 202, 302) angeordnet und an letzterer befestigt ist, und
- eine von der Empfängereinheit (21, 221, 321) separate Sendeeinheit (13, 20, 320), an die über eine elektrische Signalleitung (3, 103, 203, 303) mindestens ein von dem Sensor (5, 105, 205, 305) gemessenes Steuersignal direkt oder indirekt übertragbar ist, wobei der Sensor (5, 105, 205, 305) mittels der mindestens einen elektrischen Signalleitung (3, 103, 203, 303) mit der Sendeeinheit (13, 20, 230) oder der Empfängereinheit (21, 321) verbindbar oder verbunden ist.

2. Kabelset (1, 101, 201, 301) nach Anspruch 1, **dadurch gekennzeichnet, dass** der Abstand zwischen dem mindestens einen Sensor (5, 105, 205, 305) und dem ersten Ende (8, 208, 308) der mindestens einen elektrischen Audioleitung (2, 102, 202, 302) maximal 30 cm, vorzugsweise maximal 20 cm, weiter vorzugsweise maximal 10 cm, beträgt.

3. Kabelset (1, 101, 201, 301) nach Anspruch 1 oder 2, **dadurch gekennzeichnet, dass** das zweite Ende (9)
- mit der Empfängereinheit (21) oder der Sendeeinheit (13, 20) verbunden ist oder
- einen zweiten Stecker (7, 307) aufweist, der mit der Empfängereinheit (321) oder der Sendeeinheit (320) verbindbar ist und sich vorzugsweise von dem ersten Stecker (6, 106, 206, 306) unterscheidet.

4. Kabelset (1, 301) nach einem der Ansprüche 1 bis 3, **dadurch gekennzeichnet, dass** die elektrische Signalleitung (3, 103, 203, 303) an einem dem Kopfhörer oder Ohrhörer (322) abgewandten Ende (12) einen Stecker aufweist, wobei der Stecker vorzugsweise der zweite Stecker (7, 307) ist.

5. Kabelset (1, 101, 301) nach einem der Ansprüche 1 bis 4, **dadurch gekennzeichnet, dass** die Sendeeinheit (13, 20, 320) und die Empfängereinheit (21, 321) über eine Verbindungsleitung (16, 316) miteinander verbunden sind, wobei über die Verbindungsleitung (16, 316) das Steuersignal oder das Audiosignal übertragbar ist.

6. Kabelset (201, 301) nach einem der Ansprüche 1 bis 5, **gekennzeichnet durch** eine zweite elektrische Audioleitung (18, 318) zur Übertragung des Audiosignals, wobei die zweite elektrische Audioleitung (18, 318)
- an einem ersten Ende (23, 323) mit einem dritten Stecker (19, 319) versehen ist, der mit einem zweiten Kopfhörer oder Ohrhörer (24, 324) verbindbar ist,
- und an einem zweiten Ende
- entweder mit dem zweiten Stecker (7, 307) verbunden ist
- oder mit einem vierten Stecker mit der Empfängereinheit (321) oder der Sendeinheit (320) verbindbar ist
- oder mit der Empfängereinheit (20) oder der Sendeeinheit (21) verbunden ist
- oder mit einem fünften Stecker mit dem ersten Kopfhörer oder Ohrhörer verbindbar ist oder verbunden ist.

7. Kabelset (1, 101, 201, 301) nach einem der Ansprüche 1 bis 6, **dadurch gekennzeichnet, dass** an dem ersten Stecker (6, 106, 206, 306) der mindestens eine Sensor (5, 105, 205, 305) angeordnet ist.

8. Kabelset (1, 101, 201, 301) nach Anspruch 6, **dadurch gekennzeichnet, dass** an dem dritten Stecker (19, 319) der zweiten elektrischen Audioleitung (2, 102, 202, 302, 18, 318) der mindestens eine Sensor (5, 105, 205, 305) angeordnet ist.

9. Kabelset (1, 101, 201, 301) nach einem der Ansprüche 6 bis 8, **dadurch gekennzeichnet, dass**
- die mindestens eine elektrischen Audioleitung (2, 102, 202, 302) und/oder
- die zweite elektrische Audioleitung (18, 318) und/oder
- die mindestens eine Signalleitung (3, 103, 203, 303), abschnittsweise unmittelbar nebeneinander angeordnet, vorzugsweise miteinander verdrillt und/oder von einer gemeinsamen äußeren Umhüllung (4) umgeben sind, wobei sich vorzugsweise die elektrischen Audioleitungen (2, 102, 202, 302, 18, 318) sowie vorzugsweise die mindestens eine elektrische Signalleitung (3, 103, 203, 303) an einer Verzweigung (25, 325) in zwei Stränge jeweils in Richtung des ersten Kopfhörers oder Ohrhörers (22, 322) und zweiten Kopfhörers oder Ohrhörers (24, 324) aufteilen, so dass ein Abstand zwischen dem ersten Stecker (6, 106, 206, 306) und/oder dritten Stecker (19, 319) und der Verzweigung (25, 325) vorzugsweise jeweils maximal 40 cm beträgt.

10. Kabelset (301) nach Anspruch 9, **dadurch gekennzeichnet, dass** der mindestens eine Sensor (5, 105, 205, 305) und/ oder mindestens ein weiterer Sensor (28) in der Verzweigung (25, 325) angeordnet ist.

11. Kabelset (1, 101, 201, 301) nach einem der Ansprüche 1 bis 10, **dadurch gekennzeichnet, dass** der mindestens eine Sensor (5, 105, 205, 305) ein Drehratensensor oder ein Bewegungssensor oder ein Magnetometer, insbesondere ein Inertialsensor oder ein Giersensor ist.

12. Kabelset (301) nach einem der Ansprüche 10 oder 11, **dadurch gekennzeichnet, dass** der mindestens eine weitere Sensor (28) ein Drehratensensor oder ein Bewegungssensor oder ein Magnetometer, insbesondere ein Inertialsensor oder ein Giersensor ist, oder ein Temperatursensor oder ein Luftdrucksensor oder ein Feuchtigkeitssensor oder ein Mikrofon ist.

13. Kabelset nach einem der Ansprüche 11 bis 12, **dadurch gekennzeichnet, dass** die Empfängereinheit und/oder die Sendeeinheit an der Verzweigung angebracht ist.

14. Verfahren zur Übertragung eines Audiosignals von einer Monitoringeinheit (32) an einen am Kopf eines Trägers (17, 117, 217, 317) befindlichen Kopfhörer oder Ohrhörer (22, 322) mit folgenden Verfahrensschritten:
a) das Audiosignal wird von der Monitoringeinheit (32), die in einem Abstand zu dem Träger des Kabelsets (1, 101, 201, 301) angeordnet ist, der zwischen 2 m und 50 m beträgt, an eine an dem Körper des Trägers (17, 117, 217, 317) befindliche Empfängereinheit (21, 321) gesendet,
b) von der Empfängereinheit (21, 321) wird das Audiosignal über ein Kabelset (1, 101, 201, 301) mit mindestens einer elektrischen Audioleitung (2, 102, 202, 302), die ein erstes mit einem ersten Stecker (6, 106, 206, 306) versehenes und mit einem Kopfhörer oder Ohrhörer (22, 322) verbindbares Ende (8, 208, 308) und ein zweites mit dem ersten Ende (8, 208, 308) gegenüberliegendes Ende (9) umfasst, an den Kopfhörer oder Ohrhörer (22, 322) geleitet,
**dadurch gekennzeichnet, dass**
c) mindestens ein Sensor (5, 105, 205, 305) seine Ausrichtung relativ zu seiner Umgebung misst, wobei der Sensor (5, 105, 205, 305) in einem Abstand von maximal 40 cm zu dem ersten Ende (8, 208, 308) der mindestens einen elektrischen Audioleitung 2, 102, 202, 302) angeordnet und an letzterer befestigt ist,
d) die Ausrichtung des Sensors (5, 105, 205, 305) über eine Signalleitung (3, 103, 203, 303) an eine an dem Körper des Trägers (17, 117, 217, 317) befindliche, von der Empfängereinheit separate Sendeeinheit (13, 20, 320) weitergeleitet und anschließend an die Monitoringeinheit (32) gesendet wird, und
e) die Monitoringeinheit (32) das Audiosignal in Abhängigkeit von der Ausrichtung des mindestens einen Sensors (5, 105, 205, 305) ausgibt.

## Claims

1. A cable set (1, 101, 201, 301) comprising at least one electrical audio line (2, 102, 202, 302) for transmitting an audio signal from a receiving unit (21, 221, 321) that is designed to receive the audio signal to headphones or earphones (22, 322), wherein the at least one electrical audio line (2, 102, 202, 302) has a first end (8, 208, 308) which is provided with a first plug (6, 106, 206, 306) and connectable to the headphones or earphones (22, 322), and a second end (9) which is opposite the first end (8, 208, 308), **characterized by**
- at least one sensor (5, 105, 205, 305) for measuring an orientation of the sensor (5, 105, 205, 305), which is arranged on the at least one electrical audio line (2, 102, 202, 302) at a distance not exceeding 40 cm from the first end (8, 208, 308) thereof and is fastened thereto, and
- a transmitting unit (13, 20, 320) separate from the receiving unit (21, 221, 321) to which at least one control signal measured by the sensor (5, 105, 205, 305) can be transmitted directly or indirectly via an electrical signal line (3, 103, 203, 303), wherein the sensor (5, 105, 205, 305) can be or is connected to the transmitting unit (13, 20, 230) or the receiving unit (21, 321) by means of the at least one electrical signal line (3, 103, 203, 303).

2. The cable set (1, 101, 201, 301) according to Claim 1, **characterized in that** the distance between the at least one sensor (5, 105, 205, 305) and the first end (8, 208, 308) of the at least one electrical audio line (2, 102, 202, 302) is 30 cm at the most, preferably 20 cm at the most, more preferably 10 cm at the most.

3. The cable set (1, 101, 201, 301) according to Claim 1 or 2, **characterized in that** the second end (9)
- is connected with the receiving unit (21) or the transmitting unit (13, 20), or
- includes a second plug (7, 307) which is connectable with the receiving unit (321) or the transmitting unit (320) and is preferably different from the first plug (6, 106, 206, 306).

4. The cable set (1, 301) according to any one of Claims 1 to 3, **characterized in that** the electrical signal line (3, 103, 203, 303) has a plug on an end (12) farthest from the headphones or earphone (322), wherein the plug is preferably the second plug (7, 307) .

5. The cable set (1, 101, 301) according to any one of Claims 1 to 4, **characterized in that** the transmitting unit (13, 20, 320) and the receiving unit (21, 321) are connected to one another via a connecting conductor (16, 316), wherein the control signal or the audio signal can be transmitted via the connecting conductor (16, 316).

6. The cable set (201, 301) according to any one of Claims 1 to 5, **characterized by** a second electrical audio line (18, 318) for transmitting the audio signal, wherein the second electrical audio line (18, 318)
- is furnished on a first end (23, 323) with a third plug (19, 319) which is connectable to a second headphone or earphone (24, 324) and connected at a second end with the second plug,
- and on a second end
- is either connected to the second plug (7, 307),
- or can be connected by means of a fourth plug to the receiving unit (321) or the transmitting unit (320)
- or is connected to the receiving unit (20) or the transmitting unit (21)
- or is or can be connected to the first headphones or earphones by means of a fifth plug.

7. The cable set (1, 101, 201, 301) according to any one of Claims 1 to 6, **characterized in that** the at least one sensor (5, 105, 205, 305) is arranged on the first plug (6, 106, 206, 306).

8. The cable set (1, 101, 201, 301) according to Claim 6, **characterized in that** the at least one sensor (5, 105, 205, 305) is arranged on the third plug (19, 319) of the second electrical audio line (2, 102, 202, 302, 18, 318).

9. The cable set (1, 101, 201, 301) according to any one of Claims 6 to 8, **characterized in that**
- the at least one electrical audio line (2, 102, 202, 302) and/or
- the second electrical audio line (18, 318) and/or
- the at least one signal line (3, 103, 203, 303) are arranged such that sections thereof are directly adjacent to each other, preferably twisted together with each other and/or are surrounded by a common outer shell (4), wherein preferably the electrical audio lines (2, 102, 202, 302, 18, 318) and preferably the at least one electrical signal line (3, 103, 203, 303) are divided at a branching point (25, 325) into two strands leading respectively towards the first headphones or earphones (22, 322) and the second a second headphones or earphones (24, 324) so that a distance from the first plug (6, 106, 206, 306) and/or the third plug (19, 319) to the branching point (25, 325) is preferably not more than 40 cm in each case.

10. The cable set (301) according to Claim 9, **characterized in that** the at least one sensor (5, 105, 205, 305) and/or at least one further sensor (28) is arranged in the branching point (25, 325).

11. The cable set (1, 101, 201, 301) according to any one of Claims 1 to 10, **characterized in that** the at least one sensor (5, 105, 205, 305) is an angular rate sensor or a motion sensor or a magnetometer, particularly an inertial sensor or a yaw sensor.

12. The cable set (301) according to either of Claims 10 or 11, **characterized in that** the at least one further sensor (28) is an angular rate sensor or a motion sensor or a magnetometer, particularly an inertial sensor or a yaw sensor or a temperature sensor or an air pressure sensor or a humidity sensor or a microphone.

13. The cable set according to either of Claims 11 or 12, **characterized in that** the receiving unit and/or the transmitting unit is attached to the branching point.

14. A method for transmitting an audio signal from a monitoring unit (32) to a headphone or earphone (22, 322) located on the head of a wearer (17, 117, 217, 317) having the following steps:
a) the audio signal is transmitted from the monitoring unit (32) which is arranged at a distance between 2 m and 50 m from the wearer of the cable set (1, 101, 201, 301), to a receiving unit (21, 321) which is located on the body of the wearer (17, 117, 217, 317);
b) the audio signal is conducted from the receiving unit (21, 321) to the headphones or earphones (22, 322) via a cable set (1, 101, 201, 301) having at least one electrical audio line (2, 102, 202, 302) that has a first end (8, 208, 308) which is furnished with a first plug (6, 106, 206, 306) and is connectable to a headphone or earphone (22, 322), and a second end (9) which is arranged opposite to the first end (8, 208, 308),
**characterized in that**
c) at least one sensor (5, 105, 205, 305) measures its orientation relative to its surroundings, wherein the sensor (5, 105, 205, 305) is arranged at a distance of not more than 40 cm from the first end (8, 208, 308) of the at least one electrical audio line (2, 102, 202, 302) and is fastened thereto,
d) the orientation of the sensor (5, 105, 205, 305) is forwarded via a signal line (3, 103, 203, 303) to a transmitting unit (13, 20, 320) which is located on the body of the wearer (17, 117, 217, 317) and is separate from the receiving unit, and subsequently transmitted to the monitoring unit (32), and
e) the monitoring unit (32) emits the audio signal depending on the orientation of the at least one sensor (5, 105, 205, 305).

## Revendications

1. Jeu de câbles (1, 101, 201, 301) avec au moins une ligne audio électrique (2, 102, 202, 302) pour transmettre un signal audio depuis une unité de réception configurée pour la réception d'un signal audio (21, 221, 321) à un casque ou des écouteurs (22, 322), dans lequel la au moins une ligne audio électrique (2, 102, 202,302) comprend une première extrémité (8, 208, 308) munie d'une première fiche (6, 106, 206, 306) et pouvant être connectée au casque ou aux écouteurs (22, 322) et une seconde extrémité opposée (9) à la première extrémité (8, 208, 308), **caractérisé par**
- au moins un capteur (5, 105, 205, 305) pour mesurer une orientation du capteur (5, 105, 205, 305), qui est disposée à une distance d'au plus 40 cm de la première extrémité (8, 208, 308) d'au moins une ligne audio électrique (2, 102, 202, 302) disposée et fixée à ce dernier, et
- une unité d'émission (13, 20, 320) distincte de l'unité de réception (21, 221, 321), à laquelle par l'intermédiaire d'une ligne de signal électrique (3, 103, 203, 303) au moins un signal de commande mesuré directement ou indirectement par le capteur (5, 105, 205, 305) peut être transmis, dans lequel le capteur (5, 105, 205, 305) est connecté ou peut être connecté au moyen d'au moins une ligne de signal électrique (3, 103, 203, 303) avec l'unité d'émission (13, 20, 230) ou l'unité de réception (21, 321).

2. Jeu de câbles (1, 101, 201, 301) selon la revendication 1, **caractérisé en ce que** la distance entre au moins un capteur (5, 105, 205, 305) et la première extrémité (8, 208, 308) d'au moins une ligne audio électrique (2, 102, 202, 302) est d'un maximum de 30 cm, de préférence d'un maximum de 20 cm de préférence un maximum de 10 cm.

3. Jeu de câbles (1, 101, 201, 301) selon la revendication 1 ou 2, **caractérisé en ce que** la deuxième extrémité (9)
- est connectée à l'unité de réception (21) ou à l'unité d'émission (13, 20) ou
- présente un deuxième connecteur (7, 307) qui peut être connecté à l'unité de réception (321) ou à l'unité d'émission (320) et diffère de préférence du premier connecteur (6, 106, 206, 306).

4. Jeu de câbles (1, 301) selon une des revendications 1 à 3, **caractérisé en ce que** la ligne de signal électrique (3, 103, 203, 303) présente une fiche à une extrémité tournée vers l'extérieur du casque (322) ou des écouteurs (12), dans lequel la fiche est de préférence la deuxième fiche (7, 307).

5. Jeu de câbles (1, 101, 301) selon une des revendications 1 à 4, **caractérisé en ce que** l'unité d'émission (13, 20, 320) et l'unité de réception (21 321) sont reliées entre elles via une ligne de connexion (16, 316), dans lequel le signal de commande ou le signal audio peuvent être transmis via la ligne de connexion (16, 316).

6. Jeu de câbles (201, 301) selon une des revendications 1 à 5, **caractérisé par** une deuxième ligne audio électrique (18, 318) pour transmettre le signal audio, dans lequel la deuxième ligne audio électrique (18, 318)
- à une première extrémité (23, 323) est pourvue d'une troisième fiche (19, 319) qui peut être connectée à un deuxième casque ou écouteur (24, 324),
- et à une deuxième extrémité
- soit est connectée au deuxième connecteur (7, 307)
- soit peut être connectée à l'unité de réception (321) ou à l'unité d'émission (320) avec une quatrième fiche
- soit est connectée à l'unité de réception (20) ou à l'unité d'émission (21)
- soit est ou peut être connectée au premier casque ou écouteur avec une cinquième fiche.

7. Jeu de câbles (1, 101, 201, 301) selon une des revendications 1 à 6, **caractérisé en ce que** sur le premier connecteur (6, 106, 206, 306) au moins un capteur (5, 105, 205, 305) est disposé.

8. Jeu de câbles (1, 101, 201, 301) selon la revendication 6, **caractérisé en ce que** sur le troisième fiche (19, 319) de la deuxième ligne audio électrique (2, 102, 202, 302, 18, 318) au moins un capteur (5, 105, 205, 305) est disposé.

9. Jeu de câbles (1, 101, 201, 301) selon une des revendications 6 à 8, **caractérisé en ce que**
- la au moins une ligne audio électrique (2, 102, 202, 302) et/ou
- la deuxième ligne audio électrique (18, 318) et/ou
- la au moins une ligne de signal (3, 103, 203, 303),
sont disposées en sections directement côte à côte, de préférence torsadées ensemble et/ou entourées d'une gaine extérieure commune (4), dans lequel de préférence les lignes électriques audio (2, 102, 202, 302, 18, 318) et de préférence la au moins une ligne de signal électrique (3, 103, 203, 303) divisent sur un embranchement (25, 325) en deux brins respectivement dans le sens du premier casque ou écouteurs (22, 322) et du deuxième casque ou écouteurs (24, 324) de sorte qu'il y ait une distance entre le premier connecteur (6, 106, 206, 306) et/ou le troisième connecteur (19, 319) et l'embranchement (25, 325) est de préférence d'un maximum de 40 cm respectivement.

10. Jeu de câbles (301) selon la revendication 9, **caractérisé en ce que** le au moins un capteur (5, 105, 205, 305) et/ou au moins un autre capteur (28) est disposé dans l'embranchement (25, 325).

11. Jeu de câbles (1, 101, 201, 301) selon une des revendications 1 à 10, **caractérisé en ce que** le au moins un capteur (5, 105, 205, 305) est un capteur de vitesse de rotation ou un capteur de mouvement ou un magnétomètre, notamment un capteur inertiel ou un capteur de lacet.

12. Jeu de câbles (301) selon une des revendications 10 ou 11, **caractérisé en ce que** au moins un autre capteur (28) est un capteur de vitesse de rotation ou un capteur de mouvement ou un magnétomètre, notamment un capteur inertiel ou un capteur de lacet, ou un capteur de température, ou un capteur de pression d'air, ou un capteur d'humidité ou un microphone.

13. Jeu de câbles selon une des revendications 11 à 12, **caractérisé en ce que** l'unité de réception et/ ou l'unité d'émission est fixée à l'embranchement.

14. Procédé pour transmettre un signal audio d'une unité de surveillance (32) à un casque ou un écouteur (22, 322) situé sur la tête d'un porteur (17, 117, 217, 317) comportant les étapes de procédé suivantes :
a) le signal audio provient de l'unité de contrôle (32), qui est disposée à une distance du porteur du jeu de câbles (1, 101, 201, 301), qui est comprise entre 2 m et 50 m, est envoyé à une unité de réception (21, 321) se trouvant sur le corps du porteur (17, 117, 217, 317),
b) l'unité de réception (21, 321) transmet le signal audio au casque ou aux écouteurs (22, 322) via un jeu de câbles (1, 101, 201, 301) avec au moins une ligne audio électrique (2, 102, 202, 302), qui a une première extrémité (8, 208, 308) pourvue d'une première fiche (6, 106, 206, 306) et connectable avec un casque ou des écouteurs (22, 322) et une deuxième extrémité opposée (9) à la première extrémité (8, 208, 308),
**caractérisé en ce que**
c) au moins un capteur (5, 105, 205, 305) mesure son orientation par rapport à son environnement, dans lequel le capteur (5, 105, 205, 305) est disposé à une distance maximale de 40 cm par rapport à la première extrémité (8, 208, 308) d'au moins une ligne audio électrique (2, 102, 202, 302) et fixé à cette dernière,
d) l'alignement du capteur (5, 105, 205, 305) est transmis via une ligne de signal (3, 103, 203, 303) à une unité d'émission (13, 20, 320) se trouvant sur le corps du porteur (17, 117, 217, 317) séparée de l'unité de réception puis envoyée à l'unité de surveillance (32), et
e) l'unité de surveillance (32) émet le signal audio en fonction de l'orientation du au moins un capteur (5, 105, 205, 305).
